# EUROPÄISCHE PATENTSCHRIFT

(11) **EP 1 878 906 B1**
(45) Veröffentlichungstag und Bekanntmachung des Hinweises auf die Patenterteilung: **08.06.2011**
(21) Anmeldenummer: 07112110.7
(22) Anmeldetag: 10.07.2007
(51) Int. Cl.: F02M 35/10

(54) **Ansaugeinrichtung für eine Brennkraftmaschine**
Suction device for a combustion engine
Système d'admission pour moteur à combustion interne

(30) Priorität: 14.07.2006 DE 202006011026 U
(43) Veröffentlichungstag der Anmeldung: 16.01.2008
(73) Patentinhaber: MANN+HUMMEL GmbH, 71638 Ludwigsburg (DE)
(72) Erfinder: Madeira, Pedro Miguel Pereira, 71679 Asperg (DE)

(56) Entgegenhaltungen:
- EP-A- 1 264 982
- EP-A- 1 452 722
- WO-A-92/12845
- FR-A- 2 690 376
- JP-A- 2003 314 391
- JP-A- 2005 319 613
- US-A- 4 601 927

## Beschreibung

### Technisches Gebiet

Die Erfindung bezieht sich auf eine Ansaugeinrichtung für eine Brennkraftmaschine nach dem Oberbegriff des Anspruches 1

### Stand der Technik

In der DE 199 44 855 A1 wird eine Ansaugeinrichtung für eine Brennkraftmaschine beschrieben, bei der Kunststoffeinzelteile des Gehäuses mittels Reibschweißens miteinander verbunden werden. Es handelt sich hierbei um Einzelteile von Ansaugrohren, die teilweise stirnseitig und teilweise über ihre axiale Länge jeweils korrespondierende Schweißflächen aufweisen, die im montierten Zustand aneinander liegen und mittels Reibschweißens miteinander verschweißt werden. Diese Schweißflächen bestehen aus flanschartigen, radialen Erweiterungen in der Wandung des Kunststoffgehäuseteils, wodurch eine vergrößerte zu verschweißende Fläche gegeben ist. Zwei der zu verbindenden Kunststoffeinzelteile werden zunächst in der Weise zueinander ausgerichtet, dass die korrespondierenden Schweißflächen miteinander in Kontakt gelangen, woraufhin auf die Schweißflächen eine Verbindungskraft aufgebracht und den Gehäuseteilen eine Relativbewegung aufgeprägt wird, bis die Teile miteinander reibverschweißt sind. In gleicher Weise wird mit dem dritten Kunststoffeinzelteil verfahren, das mit dem Verbund der ersten beiden Gehäuseeinzelteile ebenfalls mithilfe des Reibschweißens verbunden wird.

Aus der EP 1 392 961 B1 ist es bekannt, zwei Kunststoffeinzelteile einer Ansaugeinrichtung, zwischen denen Strömungskanäle für Verbrennungsluft gebildet sind, mittels Reibschweißung zu verbinden. Die Kunststoffeinzelteile sind als Halbschalen ausgebildet, die beidseitig außerhalb des zwischenliegenden Strömungskanals axial verlaufende Stege aufweisen, welche miteinander verschweißt werden. Man erhält dadurch eine sich über die Länge des Strömungskanals zu beiden Seiten des Kanals erstreckende axiale Schweißnaht großer Länge.

Das Dokument JP2003314391A zeigt einen zweiteiligen Einlasskrümmer, der zur Verbesserung des Schallschutzes in einem Gehäuseteil, welches einen Teil des Luftsammlers bildet, eine teilweise doppelwandige Gehäusestruktur aufweist. Die Außenwand des Einlasskrümmers wird zu einem Teil von einem ersten Gehäuseteil und zu einem anderen Teil von einem zweiten Gehäuseteil gebildet und ist entlang einer in einer Trennebene liegenden Verbindungszone verbunden.

In der Schrift JP2005319613A ist eine Methode zum Verbinden von mehreren Kunststoffteilen zu entnehmen. Um eine feste Verbindung der Teile zueinander zu schaffen, wird eine bestimmte Schweißreihenfolge vorgeschlagen, wobei alle Kunststoffteile in Fügerichtung hintereinander angeordnet werden.

Die Veröffentlichung WO92/12845A zeigt ein Herstellverfahren für einen Einlasskrümmer aus einer Kunststoffverbundkonstruktion mit gekrümmten Traktteilen, wobei die das Gehäuse des Einlasskrümmers aus zwei Komponenten mit zueinander komplementären Fügeflächen gebildet wird, die entlang einer Fügefläche durch Vibrieren einer Komponenten relativ zu der anderen Komponente gefügt werden. Dabei sind die Fügeflächen mit einem Winkel von wesentlich über 60° zu einer senkrecht zur Richtung der Klemmkraft liegenden Ebenen geneigt.

### Offenbarung der Erfindung

Von diesem Stand der Technik ausgehend liegt der Erfindung die Aufgabe zugrunde, mit einfachen konstruktiven Maßnahmen eine sichere und dauerhafte Verbindung zwischen Kunststoffeinzelteilen einer Ansaugeinrichtung für eine Brennkraftmaschine herzustellen.

Diese Aufgabe wird erfindungsgemäß mit den Merkmalen des Anspruches 1 gelöst. Die Unteransprüche geben zweckmäßige Weiterbildungen an.

Gemäß eines nicht erfindungsgemäßen Aspektes umfasst die Ansaugeinrichtung mindestens zwei Kunststoffeinzelteile, die durch Reibschweißen miteinander zu verbinden sind, wobei die beiden Kunststoffeinzelteile zwei zueinander beabstandete Schweißflächen aufweisen, die jeweils in Ebenen liegen, welche mit der Längsachse des durch die Ansaugeinrichtung geführten Strömungskanals einen Winkel einschließen. Somit erfolgt die Verbindung zwischen den beiden Kunststoffeinzelteilen über mindestens zwei Schweißflächen, wodurch zusätzliche statische und dynamische Kräfte zwischen den Kunststoffeinzelteilen übertragen werden können und die Dichtigkeit verbessert ist. Bevorzugt übernimmt mindestens eine Schweißfläche zusätzlich zur Stütz- und Haltefunktion auch die Aufgabe, den Strömungskanal nach außen strömungsdicht abzuschließen. Die Ebenen der Schweißflächen liegen vorteilhaft zumindest teilweise in einem 90°-Winkel zur Strömungskanallängsachse, wodurch verhältnismäßig kurz ausgeführte Schweißflächen bei optimaler Kraftübertragung und Dichtfunktion realisiert werden können.

Gemäß einer vorteilhaften Ausführung weisen die Schweißflächen einen unterschiedlichen radialen Abstand zum Strömungskanal auf, was den Vorteil bringt, dass die Dichtigkeit auch für den Fall gewährleistet ist, dass eine der Schweißflächen undicht wird; in diesem Fall wird die Dichtfunktion von der verbleibenden zweiten Schweißfläche übernommen. Aufgrund des unterschiedlichen radialen Abstandes der Schweißflächen zum Strömungskanal durch die Ansaugeinrichtung umgreift jede der Schweißflächen den Strömungskanal beispielsweise ringförmig bzw. teilringförmig, so dass zumindest in dem Segment mit zwei radial beabstandeten Schweißflächen eine erhöhte Sicherheit gegeben ist.

Die zusätzliche Schweißfläche bewirkt eine Kräfteverteilung, wodurch die auf jede einzelne Schweißfläche wirkenden Stützkräfte zwischen den Kunststoffeinzelteilen entsprechend reduziert sind. Dies führt dazu, dass Vibrationen oder Störungen, die auf die Ansaugeinrichtung wirken, entsprechend geringere Kräfte pro Schweißfläche zur Folge haben, so dass die Standfestigkeit erhöht und der Alterungsprozess verzögert wird.

Gemäß einer zweckmäßigen Weiterbildung liegen die radial beabstandeten Schweißflächen in einer gemeinsamen Ebene, die sich quer zum Strömungskanal durch die Ansaugeinrichtung erstreckt. Möglich ist aber auch eine versetzte Anordnung der Schweißflächen sowohl in Radialrichtung als auch in Axialrichtung, derart, dass die Schweißflächen in unterschiedlichen Ebenen liegen, die sich jeweils quer zum Strömungskanal erstrecken und insbesondere parallel zueinander ausgerichtet sind. Darüber hinaus ist es aber auch möglich, diese verschiedenen Ebenen, in denen die radial und/oder axial beabstandeten Schweißflächen liegen, winklig zueinander anzuordnen, so dass die Ebenen bezogen auf den Strömungskanal unterschiedliche Winkel zu diesem einnehmen. Schließlich kann auch eine Ausführung realisiert werden, in der die Stirnseite des Strömungskanals von einem Flansch eines zweiten Kunststoffteils übergriffen wird und im Bereich dieses Flansches zumindest ein Teil der Schweißflächen vorgesehen ist, die mit korrespondierenden Schweißflächen am ersten, den Strömungskanal aufweisenden Kunststoffeinzelteil verschweißt werden.

Insbesondere für den Fall, dass die Schweißflächen in einer gemeinsamen Ebene liegen, kann es zweckmäßig sein, die Schweißflächen konzentrisch zueinander anzuordnen, so dass die Schweißflächen zumindest über einen bestimmten Winkelabschnitt in Radialrichtung den gleichen Abstand zueinander aufweisen. Die Schweißflächen können sich an dem Kunststoffeinzelteil in Umfangsrichtung gesehen entweder nur über einen Teilabschnitt erstrecken oder über den gesamten Umfang. Außerdem ist es möglich, dass die Schweißflächen über Teilbereiche konzentrisch und über weitere Teilbereiche nicht-konzentrisch verlaufen.

Für den Fall, dass die Schweißflächen in unterschiedlichen Ebenen quer zum Strömungskanal angeordnet sind, ist zwischen den Schweißflächen eine Schulter gebildet, die einen Anschlag für das korrespondierende, zu verbindende Kunststoffeinzelteil mit den entsprechenden Schweißflächen bildet.

Gemäß einer weiteren vorteilhaften Ausführung sind an dem Kunststoffeinzelteil zwischen der radial inneren und der radial äußeren Schweißfläche verbindende Rippen vorgesehen, die beispielsweise strahlenförmig, also in Radialrichtung verlaufen und zu einer zusätzlichen Stabilisierung sowohl des Kunststoffeinzelteiles an sich als auch der Schweißverbindung beitragen. Auch die verbindenden Rippen können gegebenenfalls eine Schweißfläche bilden.

Gemäß eines zweiten nicht erfindungsgemäßen Aspektes, umfasst die Ansaugeinrichtung mindestens drei Kunststoffeinzelteile, die mittels Reibschweißen miteinander verbunden sind. Hierfür weisen die Kunststoffeinzelteile zueinander korrespondierende Schweißflächen auf, die jeweils aneinander liegen, wobei durch eine Relativbewegung zwischen jeweils zwei Kunststoffeinzelteilen die korrespondierenden Schweißflächen miteinander reibverschweißt werden. Erfindungsgemäß ist vorgesehen, dass ein erstes Kunststoffeinzelteil, welches mit den beiden weiteren Kunststoffeinzelteilen verbunden ist, Schweißflächen zu den anderen Kunststoffeinzelteilen aufweist, die in Ebenen liegen, welche zueinander einen Winkel einschließen. Hierdurch wird eine Reibschweißverbindung in verschiedenen Richtungen erreicht, wodurch insbesondere eine räumliche Montage mit festen Verbindungen zwischen verschiedenen Kunststoffeinzelteilen möglich ist.

Der Prozess des Reibverschweißens erfolgt hierbei vorteilhaft in mehreren aufeinander folgenden Schritten, indem zunächst das mittlere Kunststoffeinzelteil mit einem ersten benachbarten weiteren Kunststoffeinzelteil reibverschweißt wird und anschließend eine weitere Verschweißung zwischen dem Bund aus erstem und zweitem Kunststoffeinzelteil mit dem dritten und vierten Kunststoffeinzelteil durchgeführt wird. Da die Schweißverbindungen in unterschiedlichen Ebenen liegen, welche zueinander winklig angeordnet sind, muss auch die Relativbewegung zwischen den Bauteilen, welche für das Reibschweißen erforderlich ist, entlang dieser jeweiligen Ebenen erfolgen.

Gemäß einer vorteilhaften Ausführung ist vorgesehen, dass die Schweißflächen, über die das erste Kunststoffeinzelteil mit den weiteren Bauteilen reibverschweißt ist, am ersten Kunststoffeinzelteil unmittelbar zueinander benachbart angeordnet sind. Beispielsweise kann ein Rohrflansch am mittleren Kunststoffeinzelteil mehrere Schweißflächen aufweisen, die zueinander winklig angeordnet sind. In Frage kommt zum Beispiel eine Schweißfläche an einer Stirnseite des mittleren Kunststoffeinzelteils, eine weitere Schweißfläche, die sich entlang des Umfanges der Stirnseite erstreckt und/oder noch eine weitere Schweißfläche, welche in Radialrichtung ausgerichtet ist. Die Ebenen durch die Schweißflächen schließen jeweils zueinander einen Winkel ein, wobei die Ebene entlang des Umfanges entweder als gekrümmte Ebene aufzufassen ist oder als Summe aller Tangentialebenen, die sich entlang des Umfanges erstrecken, der von der Schweißfläche bedeckt ist.

Gemäß eines erfindungsgemäßen Aspekts kann das erste Kunststoffeinzeiteil mit drei weiteren Kunststoffeinzelteilen mittels Reibschweißens verbunden werden. In Frage kommt aber auch die Verbindung mit nur zwei weiteren Bauteilen; außerdem ist es auch möglich, die verschiedenen Schweißflächen am ersten Kunststoffeinzelteil an unterschiedlichen Positionen zu platzieren.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 eine perspektivische Ansicht einer Ansaugeinrichtung für eine Brennkraftmaschine mit einem Anschlussstutzen zur Aufnahme einer Drosselklappe, wobei der Anschlussstutzen als Kunststoffeinzelteil gefertigt ist, welches mittels Reibschweißens mit weiteren Gehäuse-Kunststoffeinzelteilen der Ansaugeinrichtung verbunden ist,

Fig. 2 und Fig. 3 der Anschlussstutzen in zwei verschiedenen Darstellungen,

Fig. 4 der Anschlussstutzen in einer alternativen Ausführung,

Fig. 5 und 6 ein mit dem Anschlussstutzen mittels Reibschweißens zu verbindendes, weiteres Kunststoffeinzelteil in zwei verschiedenen Ansichten,

Fig. 7 bis 9 der Anschlussstutzen in verschiedenen Montagestufen bei der Verbindung mittels Reibschweißens mit insgesamt drei weiteren Kunststoffeinzelteilen der Ansaugeinrichtung, die jeweils in unterschiedlichen Ebenen mit dem Anschlussstutzen reibverschweißt werden,

Fig. 10 das Detail X aus Fig. 9, welches radiale Schweißflächen zwischen zwei Kunststoffbauteilen darstellt,

Fig. 11 das Detail XI aus Fig. 8, welches eine Verbindung in Umfangsrichtung zwischen zwei Kunststoffteilen darstellt.

In den Figuren sind gleiche Bauteile mit gleichen Bezugszeichen versehen.

### Ausführungsform(en) der Erfindung

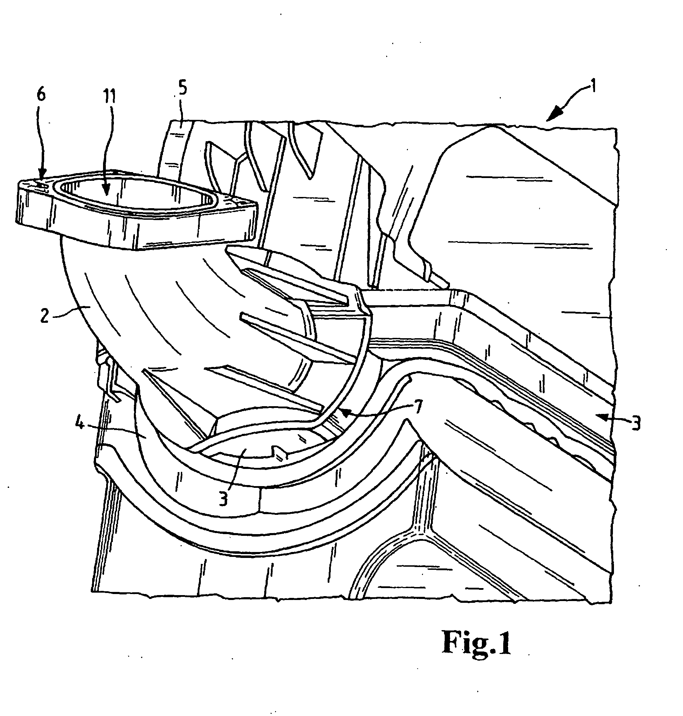

In Fig. 1 ist eine Luftansaugeinrichtung 1 für eine Brennkraftmaschine dargestellt, die aus mehreren Kunststoffeinzelteilen 2, 3, 4 und 5 besteht, die insbesondere im Spritzgussverfahren hergestellt sind. Ein erstes Kunststoffeinzelteil 2 bildet einen Anschlussstutzen mit einem Strömungskanal 11, in welchem insbesondere eine Drosselklappe aufgenommen ist und der sich durch die weiteren Kunststoffeinzelteile fortsetzt. Die Kunststoffeinzelteile 2 bis 5 sind zumindest teilweise untereinander im Wege des Reibschweißens miteinander verbunden. Hierfür werden aneinander liegende Kontaktflächen, welche Schweißflächen bilden, im Wege des Reibschweißverfahrens miteinander verschweißt, indem jeweils zwei zu verschweißende Kunststoffeinzelteile in der Schweißebene in eine Relativschwingung zueinander versetzt werden, woraufhin sich die Schweißflächen unter der Reibung erwärmen und miteinander verschweißen. Im Ausführungsbeispiel ist die der freien Stirnseite 6 des ersten Kunststoffeinzelteiles 2 gegenüberliegende Stirnseite 7 in verschiedenen Ebenen mit den drei weiteren Kunststoffeinzelteilen 3, 4 und 5 reibverschweißt.

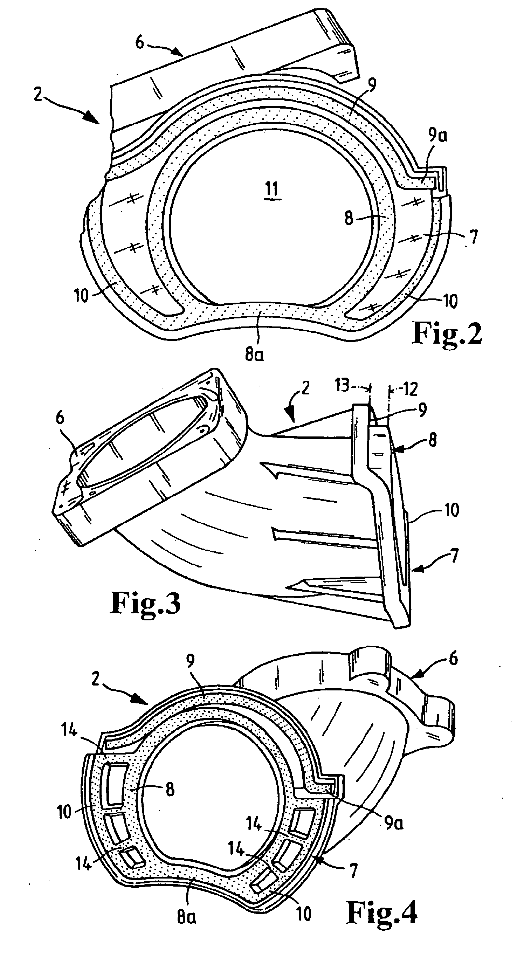

In den Fig. 2 und 3 ist das erste Kunststoffeinzelteil 2 im Detail dargestellt. Die Fig. 2 zeigt die Stirnseite 7, über die das als Anschlussstutzen ausgeführte Kunststoffeinzelteil 2 mit dem nächsten Kunststoffeinzelteil 3 reibschweißverbunden ist. Hierfür sind an der Stirnseite 7 Schweißflächen 8, 9 und 10 ausgebildet, die mit korrespondierenden Schweißflächen an dem weiteren Kunststoffeinzelteil 3 zusammenwirken und mit den dort korrespondierenden Schweißflächen verschweißt werden. Die Schweißflächen 8 bis 10 sind jeweils streifenförmig ausgebildet und erstrecken sich an der Stirnseite 7 in Umfangsrichtung um den Strömungskanal 11, der durch das Kunststoffeinzelteil 2 geführt ist. Eine erste Schweißfläche 8 erstreckt sich über 360° und umschließt den Strömungskanal 11 vollständig. Radial gegenüber der ersten Schweißfläche 8 nach außen versetzt ist eine zweite Schweißfläche 9 vorgesehen, die sich aber im Unterschied zur ersten Schweißfläche 8 nur über einen Teilbereich in Umfangsrichtung erstreckt, und zwar über annähernd 180°. In Teilabschnitten verläuft die zweite Schweißfläche 9 konzentrisch zur ersten Schweißfläche 8. Im Bereich ihrer Stirnseiten weist die zweite Schweißfläche 9 jedoch einen radial nach außen gerichteten Abschnitt 9a auf. Sämtliche Bereiche der zweiten Schweißfläche 9 liegen auf Abstand zur ersten Schweißfläche 8.

Des Weiteren ist eine dritte Schweißfläche 10 vorgesehen, die in spiegelsymmetrischer Ausbildung jeweils einen Arm an beiden Seiten eines zentralen Abschnittes 8a der ersten Schweißfläche 8 aufweist und von diesem zentralen Abschnitt 8a jeweils verzweigt. Auch die dritte Schweißfläche 8 verläuft - mit Ausnahme ihres Verbindungsabschnittes zum zentralen Abschnitt 8a - mit radialem Abstand zur ersten, innen liegenden Schweißfläche 8. Die freien Stirnseiten der dritten Schweißfläche 10 enden in Höhe des radial nach außen gerichteten Abschnittes 9a der zweiten Schweißfläche 9.

Wie Fig. 3 zu entnehmen, liegen die Schweißflächen 8 und 10 einerseits und die Schweißfläche 9 andererseits in verschiedenen, zueinander parallelen Ebenen 12 bzw. 13, die sich jeweils quer zur Strömungsrichtung durch den Strömungskanal 11 erstrecken. Die Ebene 12, in der die Schweißflächen 8 und 10 liegen, erstreckt sich an der äußeren Stirnseite 7 des Kunststoffeinzelteils 2. Die weitere Ebene 13 ist demgegenüber geringfügig zurückversetzt, wodurch zwischen der Schweißfläche 9 und den beiden weiteren Schweißflächen 8 und 10 eine Schulter gebildet ist, die zugleich einen Anschlag für das komplementär ausgebildete weitere Kunststoffeinzelteil bildet, das im Wege des Reibverschweißens mit dem ersten Kunststoffeinzelteil 2 zu verbinden ist.

In Fig. 4 ist das Kunststoffeinzelteil 2 in einer weiteren Variante dargestellt. Die Stirnseite 7 mit den daran befindlichen Schweißflächen 8, 9 und 10 entspricht in ihrem Grundaufbau dem vorherigen Ausführungsbeispiel gemäß den Fig. 2 und 3. Unterschiedlich ist aber, dass die innere, ringförmige Schweißfläche 8 mit den äußeren, teilringförmigen Schweißflächen 10 über radial verlaufende Rippen 14 verbunden ist. Im Ausführungsbeispiel sind eine Mehrzahl derartiger Rippen 14 vorgesehen, die sich in unterschiedlichen Winkelabständen zwischen den Schweißflächen 8 und 10 erstrecken, wobei jeweils zwischen zwei benachbarten Rippen 14 eine Ausnehmung freigelassen ist. Die Rippen 14 liegen in der gleichen Ebene wie die Schweißflächen 8 und 10; auch die Rippen 14 können als Schweißflächen fungieren.

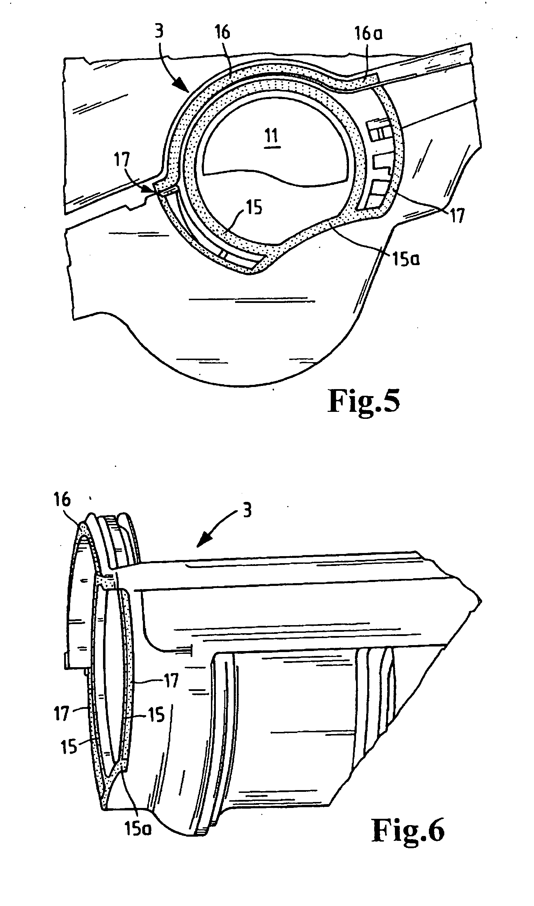

In den Fig. 5 und 6 ist das weitere Kunststoffeinzelteil 3, das mit dem ersten Kunststoffeinzelteil 2 reibverschweißt wird, in verschiedenen Darstellungen gezeigt. Eine Stirnseite des weiteren Kunststoffeinzelteils 3 weist korrespondierende, komplementär zu den Schweißflächen 8 bis 10 des ersten Kunststoffeinzelteiles 2 ausgeführte, streifenförmige Schweißflächen 15 bis 17 auf, von denen die innere Schweißfläche 15 ringförmig ausgebildet ist und den Strömungskanal 11, welcher sich im Inneren des Kunststoffeinzelteils 2 fortsetzt, umschließt. Die weiteren Schweißflächen 16 und 17 sind gegenüber der inneren Schweißfläche 15 radial nach außen versetzt, wobei die Schweißflächen 17 jeweils zu beiden Seiten eines Abschnittes 15a der inneren, ringförmigen Schweißfläche 15 verzweigen. Die weitere, radial nach außen versetzte Schweißfläche 16 liegt auf der dem Abschnitt 15a gegenüberliegenden Seite und erstreckt sich in Umfangsrichtung über einen Teilbereich. Stirnseitige Abschnitte 16a der Schweißfläche 16 verlaufen radial nach außen gerichtet, wobei die freien Enden der Schweißflächen 17 unmittelbar benachbart zu den radialen Abschnitten 16a liegen.

Wie Fig. 6 zu entnehmen, befinden sich die Schweißflächen 15 und 17 einerseits in einer gemeinsamen Ebene und die weitere Schweißfläche 16 andererseits in einer demgegenüber axial nach außen versetzten Ebene, wobei der axiale Versatz zwischen den Schweißflächen komplementär zu der Anordnung der Schweißflächen 8 bis 10 an der Stirnseite 7 des Kunststoffeinzelteils 2 ausgebildet ist (Fig. 3).

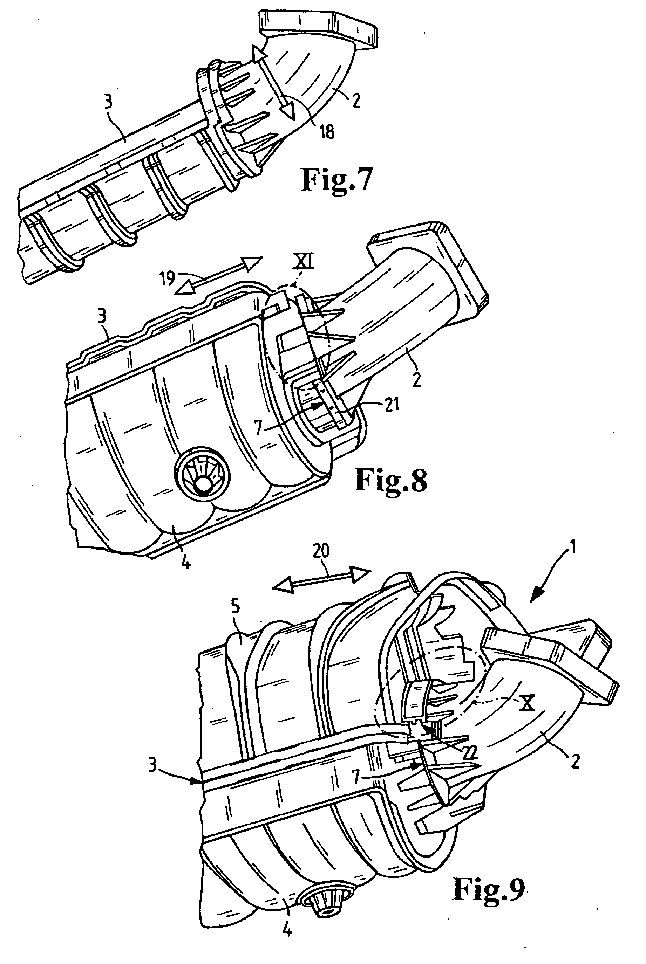

In den folgenden Fig. 7 bis 9 ist die Reibverschweißung des Kunststoffeinzelteils 2 mit den weiteren Kunststoffeinzelteilen 3 bis 5 in drei verschiedenen Schritten dargestellt. Gemäß des ersten Verfahrensschrittes wird Fig. 7 entsprechend das Kunststoffeinzelteil 2 mit dem zweiten Kunststoffeinzelteil 3 reibverschweißt. Hierfür werden die Kunststoffeinzelteile 2 und 3 stirnseitig mit ihren komplementär ausgebildeten Schweißflächen aneinandergesetzt und in Pfeilrichtung 18 in Relativschwingungen bzw. - vibrationen versetzt. Die Ebene zwischen den Schweißflächen der benachbarten Kunststoffeinzelteile 2 und 3 verläuft senkrecht zur Achse des Strömungskanals durch die Kunststoffeinzelteile. Die Vibrationsrichtung gemäß Pfeilrichtung 18 liegt in dieser Ebene.

Im folgenden Verfahrensschritt gemäß Fig. 8 wird der Verbund aus mittlerweile reibverschweißten Kunststoffeinzelteilen 2 und 3 mit dem weiteren Bauteil 4 verschweißt. Hierzu wird das Bauteil 4 an eine Schweißfläche am Bauteil 2 angelegt, die sich in Umfangsrichtung in Höhe der Stirnseite 7 erstreckt. Diese Schweißfläche 21 befindet sich am Umfang im Bereich der Stirnseite des Kunststoffeinzelteils 2. Die komplementäre, zugeordnete Schweißfläche am Bauteil 4 umgreift die umfangsseitige Schweißfläche 21, wobei die Reibschweißbewegung gemäß Pfeilrichtung 19 in Achsrichtung erfolgt.

Im dritten Verfahrensschritt zur Verbindung zwischen dem Kunststoffeinzelteil 2 und dem letzten Kunststoffeinzelteil 5 wird eine weitere, sich über einen Teilabschnitt des Umfangs erstreckende und radial gerichtete Schweißfläche 22 mit einer korrespondierenden Schweißfläche am Kunststoffeinzelteil 5 reibverschweißt. Hierzu werden die beteiligten Kunststoffeinzelteile gemäß Pfeilrichtung 20 in Relativschwingungen versetzt, wobei gegebenenfalls auch eine Relativschwingungsbewegung in Umfangsrichtung in Betracht kommt. Danach sind die Kunststoffeinzelteile 3, 4 und 5 mit dem ersten Kunststoffeinzelteil 2 reibverschweißt, so dass sämtliche Bauteile einen festen Verbund bilden.

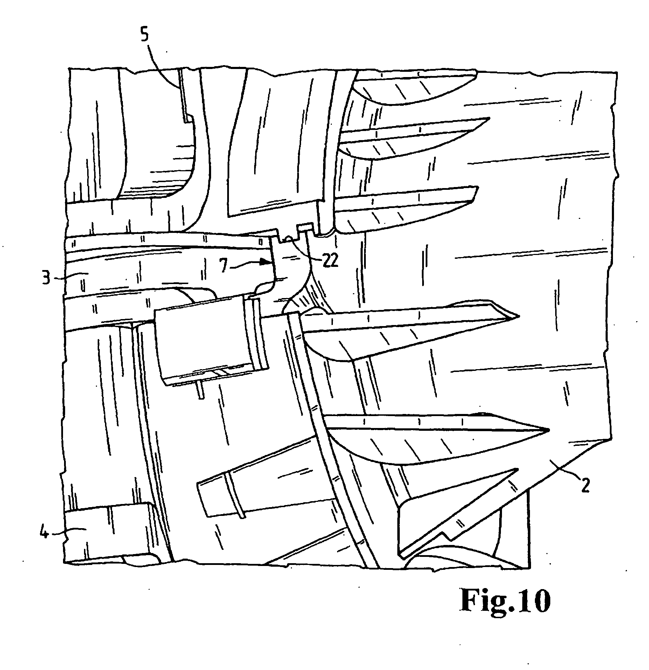

In Fig. 10 ist das Detail X aus Fig. 9 mit der radial gerichteten Schweißverbindung zwischen den Kunststoffeinzelteilen 2 und 5 in vergrößerter Darstellung gezeigt. Die Schweißfläche 22 am Kunststoffeinzeitell 2 erstreckt sich in Umfangsrichtung über einen Teilabschnitt des Umfanges und ist radial nach außen gerichtet. In diese randseitige Schweißfläche 22 ist eine Nut eingebracht, in die ein korrespondierender Vorsprung am Kunststoffeinzelteil 5 formschlüssig eingreift. Dieser Vorsprung am Kunststoffeinzelteil 5 bildet die zugehörige Schweißfläche.

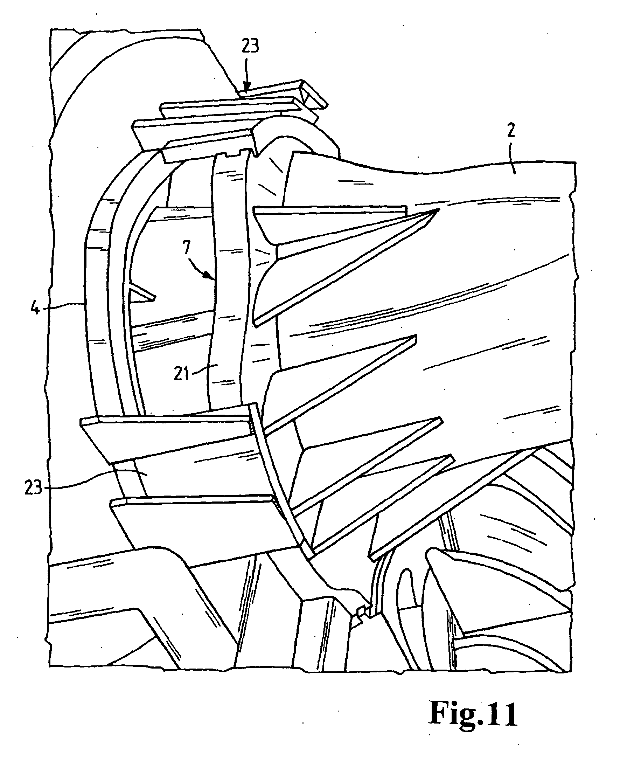

Fig. 11 entspricht einer vergrößerten Darstellung des Einzelteils XI aus Fig. 8. Zu erkennen sind axial überstehende Gehäuseabschnitte 23 an der Stirnseite des Kunststoffeinzelteiles 4, wobei die Gehäuseabschnitte 23 auf ihrer Innenseite Schweißflächen bilden und mit dieser Innenseite an der korrespondierenden, umfangsseitigen Schweißfläche 21 an der Stirnseite 7 des Kunststoffeinzelteiles 2 anliegen.

## Patentansprüche

1. Ansaugeinrichtung für eine Brennkraftmaschine, mit mehreren Kunststoffeinzelteilen (2, 3, 4, 5), von denen ein erstes Kunststoffeinzelteil (2) einen Anschlussstutzen mit einem Strömungskanal (11) bildet, in denen im montierten Zustand ein Strömungskanal (11) für Verbrennungsluft gebildet ist, wobei die Kunststoffeinzelteile (2, 3, 4, 5) zumindest teilweise untereinander im Wege des Reibschweißens miteinander verbunden sind, wobei das erste und ein zweites Kunststoffeinzelteil (2, 3) korrespondierende Schweißflächen (8, 9, 10; 15, 16, 17) aufweisen, die radial außerhalb des Strömungskanals (11) liegen und an denen die Kunststoffeinzelteile (2, 3) durch Reibschweißen miteinander verbunden sind, **dadurch gekennzeichnet, dass** sowohl am ersten als auch am zweiten Kunststoffeinzelteil (2, 3) zumindest zwei zueinander beabstandete Schweißflächen (8, 9, 10; 15, 16, 17) vorgesehen sind, die in Ebenen liegen, welche mit der Strömungskanalachse einen Winkel einschließen, wobei die einer freien Stirnseite (6) des ersten Kunststoffeinzelteils (2) gegenüberliegende Stirnseite (7) in verschiedenen Ebenen mit dem zweiten und zwei weiteren Kunststoffeinzelteilen (3, 4, 5) reibverschweißt ist.

2. Ansaugeinrichtung nach Anspruch 1, **dadurch gekennzeichnet, dass** die Schweißflächen (8, 10) mit unterschiedlichem radialem Abstand zum Strömungskanal (11) angeordnet sind.

3. Ansaugeinrichtung nach Anspruch 1 oder 2, **dadurch gekennzeichnet, dass** die Schweißflächen (8, 10; 9) zueinander axial beabstandet sind.

4. Ansaugeinrichtung nach Anspruch 3, **dadurch gekennzeichnet, dass** die Schweißflächen (8, 10; 9) in unterschiedlichen Ebenen (12; 13) quer zum Strömungskanal (11) liegen, wobei zwischen den Schweißflächen (8, 10; 9) eine Schulter gebildet ist.

5. Ansaugeinrichtung nach einem der Ansprüche 1 bis 4, **dadurch gekennzeichnet, dass** die Schweißflächen (8, 9; 15, 16) an einem Kunststoffeinzelteil (2; 3) konzentrisch zueinander angeordnet sind.

6. Ansaugeinrichtung nach einem der Ansprüche 1 bis 5, **dadurch gekennzeichnet, dass** eine Schweißfläche (9, 10; 16, 17) an einem Kunststoffeinzelteil (2; 3) sich in Umfangsrichtung nur über einen Teilabschnitt erstreckt.

7. Ansaugeinrichtung nach einem der Ansprüche 1 bis 6, **dadurch gekennzeichnet, dass** eine Schweißfläche (8; 15) an einem Kunststoffeinzelteil (2; 3) sich über den gesamten Umfang erstreckt.

8. Ansaugeinrichtung nach einem der Ansprüche 1 bis 7, **dadurch gekennzeichnet, dass** an einem Kunststoffeinzelteil (2) zwischen der radial inneren und der radial äußeren Schweißfläche (8, 10) verbindende Rippen (14) vorgesehen sind.

9. Ansaugeinrichtung nach Anspruch 8, **dadurch gekennzeichnet, dass** die verbindenden Rippen (14) ebenfalls eine Schweißfläche bilden.

10. Ansaugeinrichtung nach einem der Ansprüche 1 bis 9, **dadurch gekennzeichnet, dass** mindestens eine Schweißfläche (9; 16) einen radial gerichteten Abschnitt (9a; 16a) aufweist.

11. Ansaugeinrichtung nach einem der Ansprüche 1 bis 10, **dadurch gekennzeichnet, dass** die zueinander beabstandeten Schweißflächen (8, 9, 10; 15, 16 17; 21, 22) jeweils in Ebenen liegen, die zueinander einen Winkel einschließen.

12. Ansaugeinrichtung nach Anspruch 11, **dadurch gekennzeichnet, dass** die Schweißflächen (8, 9, 10, 21, 22) am ersten Kunststoffeinzelteil (2) zueinander unmittelbar benachbart angeordnet sind.

13. Ansaugeinrichtung nach Anspruch 11 oder 12, **dadurch gekennzeichnet, dass** eine Schweißfläche (8, 9, 10) an einer Stirnseite (7) des ersten Kunststoffeinzelteils (2), eine Schweißfläche (21) am Umfang und/oder eine Schweißfläche (22) in Radialrichtung angeordnet ist.

14. Ansaugeinrichtung nach Anspruch 1, **dadurch gekennzeichnet, dass** die Schweißflächen (8, 9, 10) jeweils streifenförmig ausgebildet sind und sich an der Stirnseite (7) in Umfangsrichtung um den Strömungskanal (11) erstrecken, der durch das Kunststoffeinzelteil (2) geführt ist, wobei eine erste Schweißfläche (8) sich über 360° erstreckt und den Strömungskanal (11) vollständig umschließt, wobei eine radial gegenüber der ersten Schweißfläche (8) nach außen versetzte zweite Schweißfläche (9) vorgesehen ist, die sich über einen Teilbereich von annähernd 180° im Umfangsrichtung erstreckt, wobei die zweite Schweißfläche (9) in Teilabschnitten konzentrisch zur ersten Schweißfläche (8) verläuft, im Bereich ihrer Stirnseiten die zweite Schweißfläche (9) einen radial nach außen gerichteten Abschnitt (9a) aufweist, wobei sämtliche Bereiche der zweiten Schweißfläche (9) auf Abstand zur ersten Schweißfläche (8) liegen, wobei eine dritte Schweißfläche (10) vorgesehen ist, die in spiegelsymmetrischer Ausbildung jeweils einen Arm an beiden Seiten eines zentralen Abschnittes (8a) der ersten Schweißfläche (8) aufweist und von diesem zentralen Abschnitt (8a) jeweils verzweigt, wobei auch die dritte Schweißfläche (10) mit Ausnahme ihres Verbindungsabschnittes zum zentralen Abschnitt (8a) mit radialem Abstand zur ersten, innen liegenden Schweißfläche (8) verläuft, wobei die freien Stirnseiten der dritten Schweißfläche (10) in Höhe des radial nach außen gerichteten Abschnittes (9a) der zweiten Schweißfläche (9) enden.

## Claims

1. Intake device for an internal combustion engine, with several individual plastic parts (2, 3, 4, 5), a first individual plastic part (2) of which forms a connecting branch with a flow channel (11), and in which in mounted condition a flow channel (11) for the combustion air is formed, the individual plastic parts (2, 3, 4, 5) being at least partially connected with each other by means of friction welding, the first and a second individual plastic part (2, 3) featuring corresponding welding surfaces (8, 9, 10;15, 16, 17) which are positioned radially outside of the flow channel (11) and on which the individual plastic parts (2, 3) are connected with each other by means of friction welding, **characterized in that** at the first as well as at the second individual plastic part (2, 3) at least two welding surfaces (8, 9, 10; 15, 16, 17) spaced apart from one another are provided which lay in planes which form an angle with the flow channel axis, the front side (7) opposing a free front side (6) of the first individual plastic part (2) being friction-welded in different planes with the second and two other individual plastic parts (3, 4, 5).

2. Intake device according to claim 1, **characterized in that** the welding surfaces (8, 10) are disposed with different radial distance to the flow channel (11).

3. Intake device according to claim 1 or 2, **characterized in that** the welding surfaces (8, 10; 9) are axially spaced to each other.

4. Intake device according to claim 3, **characterized in that** the welding surfaces (8, 10; 9) are located in different planes (12; 13) transversally to the flow channel (11), a shoulder being formed between the welding surfaces (8, 10; 9).

5. Intake device according to one of the claims 1 to 4, **characterized in that** the welding surfaces (8, 9; 15, 16) are concentrically disposed to each other at an individual plastic part (2; 3).

6. Intake device according to one of the claims 1 to 5, **characterized in that** one welding surface (9, 10; 16, 17) at one individual plastic part (2; 3) extends in circumferential direction only over one section.

7. Intake device according to one of the claims 1 to 6, **characterized in that** one welding surface (8; 15) at one individual plastic part (2; 3) extends over the complete circumference.

8. Intake device according to one of the claims 1 to 7, **characterized in that** connecting ribs (14) are provided between the radial inner and the radial outer welding surface (8, 10) at one individual plastic part (2).

9. Intake device according to claim 8, **characterized in that** the connecting ribs (14) form also a welding surface.

10. Intake device according to one of the claims 1 to 9, **characterized in that** at least one welding surface (9; 16) features a radially directed section (9a; 16a).

11. Intake device according to one of the claims 1 to 10, **characterized in that** the welding surfaces (8, 9,10; 15, 16, 17; 21, 22) spaced apart from one another are each located in planes that form an angle in relation to one another

12. Intake device according to claim 11, **characterized in that** the welding surfaces (8, 9, 10, 21, 22) are disposed directly adjacently to each other at the first individual plastic part (2).

13. Intake device according to claim 11 or 12, **characterized in that** one welding surface (8, 9, 10) is disposed at one front side (7) of the first individual plastic part (2), one welding surface (21) at the circumference and/or one welding surface (22) in radial direction.

14. Intake device according to claim 1, **characterized in that** the welding surfaces (8, 9, 10) are strip-shaped each and extend at the front side (7) in circumferential direction around the flow channel (11) which is guided through the individual plastic part (2), one first welding surface (8) extending over 360° and enclosing the flow channel (11) completely, a second welding surface (9) offset outwards radially opposite to the first welding surface (8) being provided which extends over a section of approximately 180° in circumferential direction, the second welding surface (9) running in sections concentrically to the first welding surface (8), the second welding surface (9) featuring in the area of its front sides a radially outwards directed section (9a), all areas of the second welding surface (9) are spaced apart from the first welding surface (8), a third welding surface (10) being provided which, in a mirror-symmetrical design, features one arm each on both sides of a central section (8a) of the first welding surface (8) and branching each from this central section (8a), the third welding surface (10), with the exception of its connecting section, running also towards the central section (8a) at a radial distance to the inside located first welding surface (8), the free front sides of the third welding surface (10) end at the height of the radially outwards directed sections (9a) of the second welding surface (9).

## Revendications

1. Dispositif d'aspiration pour un moteur à combustion interne avec plusieurs éléments individuels en matière plastique (2, 3, 4, 5) dont un premier élément individuel en matière plastique (2) forme une tubulure de raccord avec un canal d'écoulement (11) et dans lesquels, en position montée, un canal d'écoulement (11) pour l'air de combustion est formé, les éléments individuels en matière plastique (2, 3, 4, 5) étant reliés entre eux, au moins partiellement, par soudage par friction, le premier et un deuxième éléments individuels en matière plastique (2, 3) présentant des surfaces de soudage correspondantes (8, 9, 10; 15, 16, 17) qui se trouvent, en sens radial, à l'extérieur du canal d'écoulement (11) et auxquelles les éléments individuels en matière plastique (2, 3) sont reliés les uns aux autres par soudage par friction, **caractérisé en ce qu'**au moins deux surfaces de soudage (8, 9, 10; 15, 16, 17) éloignées l'une de l'autre sont prévues tant sur le premier que sur le deuxième élément individuel en matière plastique (2, 3), surfaces qui sont disposées sur des plans formant un angle avec l'axe du canal d'écoulement, la face frontale (7) opposée à une face frontale (6) libre du premier élément individuel en matière plastique (2) étant soudée par friction sur des plans différents avec le deuxième et deux autres éléments individuels en matière plastique (3, 4, 5).

2. Dispositif d'aspiration selon la revendication 1, **caractérisé en ce que** les surfaces de soudage (8, 10) sont disposées à des distances radiales différentes du canal d'écoulement (11).

3. Dispositif d'aspiration selon la revendication 1 ou 2, **caractérisé en ce que** les surfaces de soudage (8, 10; 9) sont disposées à une certaine distance axiale l'une de l'autre.

4. Dispositif d'aspiration selon la revendication 3, **caractérisé en ce que** les surfaces de soudage (8, 10; 9) sont situées à des plan différents (12; 13) en travers du canal d'écoulement (11), un épaulement étant formé entre les surfaces de soudage (8, 10; 9).

5. Dispositif d'aspiration selon l'une des revendications 1 à 4, **caractérisé en ce que** les surfaces de soudage (8, 9; 15, 16) sont disposées de manière concentrique l'une par rapport à l'autre sur un élément individuel en matière plastique (2; 3).

6. Dispositif d'aspiration selon l'une des revendications 1 à 5, **caractérisé en ce qu'**une surface de soudage (9, 10; 16, 17) ne s'étend que sur une section partielle en sens circonférentiel sur un élément individuel en matière plastique (2; 3).

7. Dispositif d'aspiration selon l'une des revendications 1 à 6, **caractérisé en ce qu'**une surface de soudage (8; 15) sur un élément individuel en matière plastique (2; 3) s'étend sur tout le périmètre.

8. Dispositif d'aspiration selon l'une des revendications 1 à 7, **caractérisé en ce que** des nervures de liaison (14) sont prévues entre la surface de soudage intérieure radiale et la surface de soudage extérieure radiale (8, 10) sur un élément individuel en matière plastique (2).

9. Dispositif d'aspiration selon la revendication 8, **caractérisé en ce que** les nervures de liaison (14) forment également une surface de soudage.

10. Dispositif d'aspiration selon l'une des revendications 1 à 9, **caractérisé en ce qu'**au moins une surface de soudage (9; 16) présente une section orientée en sens radial (9a; 16a).

11. Dispositif d'aspiration selon l'une des revendications 1 à 10, **caractérisé en ce que** les surfaces de soudage éloignées l'une de l'autre (8, 9, 10; 15, 16, 17; 21, 22) se situent respectivement sur des plans formant un angle les uns par rapport aux autres.

12. Dispositif d'aspiration selon la revendication 11, **caractérisé en ce que** les surfaces de soudage (8, 9, 10, 21, 22) sont disposées juste à côté de l'autre sur le premier élément individuel en matière plastique (2).

13. Dispositif d'aspiration selon la revendication 11 ou 12, **caractérisé en ce qu'**une surface de soudage (8, 9, 10) est disposée sur une face frontale (7) du premier élément individuel en matière plastique (2), une surface de soudage (21) est disposée sur le périmètre et/ou une surface de soudage (22) est disposée en sens radial.

14. Dispositif d'aspiration selon la revendication 1, **caractérisé en ce que** les surfaces de soudage (8, 9, 10) sont respectivement réalisées en forme de bande et s'étendent sur la face frontale (7), en sens circonférentiel, autour du canal d'écoulement (11) lequel est guidé à travers l'élément individuel en matière plastique (2), une première surface de soudage (8) s'étendant sur 360° et enrobant entièrement le canal d'écoulement (11), une deuxième surface de soudage (9) située en sens radial en face de la première surface de soudage (8), décalée vers l'extérieur et s'étendant sur une section d'approximativement 180° en sens circonférentiel étant prévue, la deuxième surface de soudage (9) évoluant sur certaines sections de manière concentrique à la première surface de soudage (8), cette deuxième surface de soudage (9) présentant au niveau de ses faces frontales une section (9a) dirigée vers l'extérieur en sens radial, toutes les parties de la deuxième surface de soudage (9) étant situées à une certaine distance de la première surface de soudage (8), une troisième surface de soudage (10) étant prévue qui présente par symétrie de miroir respectivement un bras des deux côtés d'une section centrale (8a) de la première surface de soudage (8) et bifurque respectivement de cette section centrale (8a), la troisième surface de soudage (10) évoluant elle aussi, à l'exception de sa section de raccordement, vers la section centrale (8a) à une distance radiale de la première surface de soudage intérieure (8), les faces frontales libres de la troisième surface de soudage (10) prenant fin à hauteur de la section (9a) dirigée vers l'extérieur en sens radial de la deuxième surface de soudage (9).
